# EUROPÄISCHE PATENTSCHRIFT

(11) **EP 0 302 201 B1**
(45) Veröffentlichungstag und Bekanntmachung des Hinweises auf die Patenterteilung: **15.09.1993**
(21) Anmeldenummer: 88109411.4
(22) Anmeldetag: 14.06.1988
(51) Int. Cl.: C04B 28/20, C04B 28/18, C04B 40/00

(54) **Verfahren zur Herstellung von dampfgehärteten Steinen**
Process for the production of steam-hardened stones
Procédé de production de pierres durcies à la vapeur

(30) Priorität: 07.08.1987 DE 3726256
(43) Veröffentlichungstag der Anmeldung: 08.02.1989
(73) Patentinhaber: Heidelberger Zement AG, D-69120 Heidelberg (DE)
(72) Erfinder: Lieber, Werner, Dr., D-6900 Heidelberg (DE); Kassautzki, Michael, Dipl.-Min., D-6902 Sandhausen (DE)
(74) Vertreter: Ratzel, Gerhard, Dr.

(56) Entgegenhaltungen:
- AT-B- 2 479
- DE-C- 449 267
- DE-C- 602 248
- DE-C- 803 028
- Enzyklopädie Naturwissenschaft und Technik, Zweiburgen Verlag, Weinheim, 1981, Seite 2631, "Löss"; Zement-Taschenbuch, 48. Auflage 1984, Seite 190-191
- Dr. Otto-Albrecht Neumüller "Römpps Chemie-Lexikon", 8. Auflage, Band 3: "H-L", 1983, Franckh'sche Verlagshandlung, Stuttgart

## Beschreibung

Die Erfindung betrifft ein Verfahren zur hydrothermalen Herstellung von dampfgehärteten Steinen aus einem Gemisch von Sand, gebranntem Kalk und/oder Kalkhydrat unter Verpressung des Gemisches zu Rohlingen und Dämpfhärtung im Kessel.

Nach dem Stand der Technik werden für die Herstellung von dampfgehärteten Steinen geeignete Zuschläge, wie z.B. Sand bis 4 mm Korngröße mit einer wesentlich feineren Komponente, wie z.B. Brechsand oder Mahlsand optimal abgestimmt, mit gebranntem Kalk versetzt und mit Wasser abgelöscht und gemischt, zu Rohlingen verpresst und mehrere Stunden lang unter Dampf im Härtekessel gehärtet. Als Reaktionsprodukte des Kalks mit der Oberfläche des Fein- und des Grobsandes entstehen dabei als Hydratationsprodukte faser- und folienförmige Calciumsilicathydrat-Phasen, die für den Zusammenhalt und die Eigenschaften des Gefüges verantwortlich sind.

Es wurde nun überraschender Weise gefunden, daß man gegenüber dem Stand der Technik sprunghaft verbesserte dampfgehärtete Steine dadurch schaffen kann, daß man ein Verfahren der eingangs genannten Gattung in der Weise durchführt, daß man ein Gemisch einsetzt, das natürlichen Löß enthält.

Eine bevorzugte Ausführungsform des erfindungsgemäßen Verfahrens ist dadurch gekennzeichnet, daß das Gemisch bis zu 24 Gew.-% Löß enthält.

Eine weitere bevorzugte Ausführungsform ist dadurch gekennzeichnet, daß das Gemisch natürlichen Löß und Hochofenschlacke enthält.

Nach einer weiteren bevorzugten Ausführungsform ist das erfindungsgemäße Verfahren dadurch gekennzeichnet, daß der eingesetzte, natürliche Löß teilweise den Feinanteil des Sands ersetzt.

Eine weitere bevorzugte Ausführungsform ist dadurch gekennzeichnet, daß man den Löß im Reaktionsgemisch durch Intensivmischung aufschließt.

Eine weitere bevorzugte Ausführungsform ist dadurch gekennzeichnet, daß die Hochofenschlacke teilweise den Grobanteil des Sands ersetzt.

Eine weitere bevorzugte Ausführungsform ist dadurch gekennzeichnet, daß man granulierte und damit eine glasige Beschaffenheit aufweisende Hochofenschlacke einsetzt.

Der Löß besteht im Vergleich zu dem bei der Kalksandstein-Herstellung üblicherweise verwendeten Quarzsand eine anders geartete mineralogische Zusammensetzung. Überraschenderweise zeigt er dennoch ein hohes Reaktionsvermögen. Nach einer ausreichend bemessenen Verweilzeit in einem geschlossenen Reaktor kann das beschriebene Gemisch unter üblichen Drucken zu Rohlingen gepreßt werden, wobei deren Eigenschaften (Standfestigkeit, Wasserrückhaltefähigkeit) durch den abgestimmten Kornaufbau und die Kombination von Löß mit granulierter Hochofenschlacke erheblich verbessert werden.

Die anschließende Härtung im Dampfkessel kann unter üblichen Bedingungen erfolgen, wobei die zur Durchhärtung erforderliche Zeit durch die Feinheit und Zusammensetzung des Löß und durch die latent hydraulischen Eigenschaften der granulierten Hochofenschlacke verkürzt werden kann. Durch die starke Verzahnung der wesentlich von der Kugelgestalt abweichenden Kornform der granulierten Hochofenschlacke und die durch den Löß verbesserte Klebewirkung der feinkörnigen Matrix lassen sich höhere Festigkeiten erzielen. Gleichzeitig wird die Stoßempfindlichkeit der Kanten des gehärteten Steines herabgesetzt.

Bezuglich der Frost-Tau-Wechselbeanspruchung wird eine Qualitätsverbesserung derart erzielt, daß Steine mit hohem Hüttensandanteil und ausschließlich Löß als Feinkomponente die Anforderungen nicht nur der Norm, sondern auch der handelsüblichen Ware weit übertreffen.

Das erfindungsgemäße Verfahren wird im folgenden anhand eines Ausführungsbeispiels erläutert:
Eine Mischung aus granulierter Hochofenschlacke, natürlichem Löß (beide etwa in der chemischen Zusammensetzung nach Tabelle I), gewaschenem Sand und gebranntem Kalk wurde im folgenden Mengenverhältnis gemischt:

| | Mischung 1 |
|---|---|
| Granulierte Hochofenschlacke | 53 % |
| Sand | 18 % |
| Löß | 24 % |
| Branntkalk | 5 % |

und durch Zugabe von Wasser auf einen Gehalt an Preßfeuchte von 5,5 % eingestellt. Dieses Gemenge wurde intensiv gemischt und eine Stunde lang im geschlossenen Reaktor belassen.

**Tabelle I**

| | Chemische Zusammensetzung von | |
|---|---|---|
| | Löß | Hochofenschlacke |
| Glühverlust % | 21,0 | + 1,6 |
| SiO₂ % | 48,7 | 32,6 |
| Al₂O₃ % | 6,3 | 14,8 |
| Fe₂O₃ % | 2,6 | 0,8 |
| CaO % | 16,2 | 42,6 |
| MgO % | 2,6 | 4,7 |
| K₂O % | 1,4 | 0,9 |
| SO₃ % | 0,2 | 1,8 |
| Summe % | 99,0 | 98,2 |

Anschließend wurden aus der Rohmasse mit hohem Preßdruck (180 bar) Steine hergestellt, diese gestapelt und im Härtekessel bei 200° C, entsprechend etwa 16 bar - wie üblich - mehrere Stunden lang gehärtet.

Die abgekühlten und getrockneten Produkte waren von reinweißer Farbe und einer ausgezeichneten Homogenität. Ihre Druckfestigkeit lag mit 26 N/mm² (Mischung 1)
deutlich über derjenigen vergleichbarer Steine mit **nur** Sand als Rohstoffkomponente.

Die erfindungsgemäß hergestellten dampfgehärteten Steine zeichnen sich durch zumindest drei Fortschrittskriterien aus:
1. Sie besitzen eine wesentlich verbesserte Festigkeit;
2. Sie besitzen eine wesentlich höhere Frostwiderstandsfähigkeit als Steine herkömmlicher Zusammensetzung.

## Patentansprüche

1. Verfahren zur hydrothermalen Herstellung von dampfgehärteten Steinen aus einem Gemisch von Sand, gebranntem Kalk und/oder Kalkhydrat unter Verpressung des Gemisches zu Rohlingen und Dampfhärtung im Kessel,
dadurch gekennzeichnet,
daß dieses Gemisch natürlichen Löß enthält.

2. Verfahren nach Anspruch 1,
dadurch gekennzeichnet,
daß das Gemisch bevorzugtermaßen bis zu 24 Gew.-% Löß enthält.

3. Verfahren nach Anspruch 1 - 2,
dadurch gekennzeichnet,
daß das Gemisch natürlichen Löß und Hochofenschlacke enthält.

4. Verfahren nach Anspruch 1 - 3,
dadurch gekennzeichnet,
daß der eingesetzte, natürliche Löß teilweise den Feinanteil des Sands ersetzt.

5. Verfahren nach Anspruch 1 - 4,
dadurch gekennzeichnet,
daß man den Löß im Reaktionsgemisch durch Intensivmischung aufschließt.

6. Verfahren nach Anspruch 3 - 5,
dadurch gekennzeichnet,
daß die Hochofenschlacke teilweise den Grobanteil des Sands ersetzt.

7. Verfahren nach Anspruch 3 - 6,
dadurch gekennzeichnet,
daß man granulierte und damit eine glasige Beschaffenheit aufweisende Hochofenschlacke einsetzt.

## Claims

1. A method for the hydrothermal production of steam-cured blocks comprising a mixture of sand, caustic lime and/or hydrated lime, the mixture undergoing compression to form blanks and steam-curing in a boiler, characterised in that this mixture contains natural loess.

2. A method according to Claim 1, characterised in that the mixture preferably contains up to 24 % by weight of loess.

3. A method according to Claims 1 and 2, characterised in that the mixture contains natural loess and blast-furnace slag.

4. A method according to Claims 1 to 3, characterised in that the natural loess used partly replaces the fine constituent of sand.

5. A method according to Claims 1 to 4, characterised in that the loess is dissolved in the reaction mixture by intensive mixing.

6. A method according to Claims 3 to 5, characterised in that the blast-furnace slag partly replaces the coarse constituent of sand.

7. A method according to Claims 3 to 6, characterised in that granulated blast-furnace slag, which thus has a vitreous quality, is used.

## Revendications

1. Procédé de fabrication hydrothermale de briques durcies à la vapeur à partir d'un mélange de sable, de chaux vive et/ou de chaux hydratée, en comprimant le mélange en briques humides qui sont durcies à la vapeur en chaudière,
**caractérisé** en ce que ce mélange contient du limon naturel.

2. Procédé selon la revendication 1, **caractérisé** en ce que le mélange contient de préférence jusqu'à 24 % (en poids) de limon.

3. Procédé selon la revendication 1 ou 2, **caractérisé** en ce que le mélange contient du limon naturel et du laitier de haut fourneau.

4. Procédé selon l'une quelconque des revendications 1 à 3, **caractérisé** en ce que le limon naturel utilisé remplace en partie le sable à grains fins.

5. Procédé selon l'une quelconque des revendications 1 à 4, **caractérisé** en ce qu'on désagrège le limon dans le mélange réactif par mélangeage intensif.

6. Procédé selon l'une quelconque des revendications 3 à 5, **caractérisé** en ce que le laitier de haut fourneau remplace en partie le sable à gros grains.

7. Procédé selon l'une quelconque des revendications 3 à 6, **caractérisé** en ce qu'on utilise du laitier de haut fourneau granulé et présentant ainsi un état vitreux.
